# EUROPEAN PATENT SPECIFICATION

(11) **EP 2 025 630 B1**
(45) Date of publication and mention of the grant of the patent: **16.11.2011**
(21) Application number: 07114422.4
(22) Date of filing: 16.08.2007
(51) Int. Cl.: B65G 57/24, B65G 61/00, B65G 65/00

(54) **Method and device for loading packed goods using an intermediate load unit**
Verfahren und Vorrichtung zum Verladen verpackter Güter über eine Zwischenladeeinheit
Procédé et dispositif pour le chargement d'articles conditionnés à l'aide d'une unité de chargement intermédiaire

(43) Date of publication of application: 18.02.2009
(73) Proprietor: Delft University of Technology, 2629 HS Delft (NL); Quintech Engineering Innovations B.V., 2628 AL Delft (NL)
(72) Inventor: Reijnen, Roel, 3021DH Rotterdam (NL); Ross, Leander Henricus Albertus, 2625BM Delft (NL); Houlleberghs, Bart Rene Yvonne, 2555SC 's-Gravenhage (NL); Naber, Jorick, 1055ZK Amsterdam (NL); Van der Meulen, Reinout Jules Reinhilde, 2611GD Delft (NL)
(74) Representative: Brouwer, Hendrik Rogier

(56) References cited:
- EP-A- 0 636 557
- EP-A- 1 462 394
- EP-A- 1 462 399
- FR-A- 2 768 709
- US-A- 3 838 763
- US-A1- 2005 246 056

## Description

The invention relates to a method and device for loading packed goods in a transport unit. The invention preferably relates to a method and device for loading packed goods in a transport unit using a palletizing machine. The invention in particular relates to a method and device for loading packed goods in an airfreight container.

Palletizing machines are commonly used for bulk loading goods of standard and similar shapes and dimensions onto a pallet. System complexity is much increased if the goods are not similar and standard in shapes and dimensions. If this is the case, loading algorithms are often used in order to determine the optimal loading sequence of a pallet. Palletizing machines are hence also used for bulk loading of diverse goods, having different and non-standard shapes and dimensions on the same pallet. This has reduced the need for sorting such goods and arranging them prior to actual loading. An important drawback of palletizing machines is however that these can only be used for forming stacks of goods on a transport unit that primarily consists of a flat plate, such as a pallet. A pallet is defined as a platform that is used to stack items during moving or storage. As a result of this characteristic, palletizing machines are not suited for the loading of goods in case the transport unit is box-like and consists of at least four solid and fixed panels and one or two panels that can be opened, closed and/or removed for loading and unloading purposes, such as boxes, containers, of which airfreight containers are preferred, and the like.

Traditionally, box-like (closable) transport units are loaded with packed goods piece by piece and either by hand or mechanically. There are several problems related to both methods. Manual loading in general is highly labor intensive and therefore expensive. More importantly, the task of loading packed goods by hand can be a very arduous and monotonous task, which may result in serious work-related injuries among personnel if the packed goods are of high-weight. If the loading is performed mechanically, this is often to the detriment of capacity and/or loading efficiency. The latter is especially the case if the packed goods are of non-similar and non-standard shapes and dimensions. As a result of a decreased loading efficiency, fewer packed goods may be loaded in a single transport unit and more transport units are needed for transporting a certain amount of packed goods. This has a negative impact on the transportation costs.

EP 0 636 557 A1 describes a device for loading packed goods in a transport unit. The device comprises an orientation unit for orienting packed goods, means for transferring the packed goods to the orientation unit, a load module, provided with an intermediate load unit for temporarily loading a layer of the packed goods in their oriented state, and means for transferring the contents of the intermediate load unit into the transport unit. The device aims to load packed goods into a container, such that the container after filling can be oriented without damage to the goods. The intermediate load unit in the form of a holder with bottom thereto places the goods into the container layer by layer. The holder is lowered into the container to be filled, and the bottom of the holder is released just before it reaches the bottom of the container.

EP 1 462 399 A2 discloses a similar device as disclosed in EP 0 636 557 A1. The device of EP 1 462 399 A2 accommodates stacked goods in a container without disturbing the stack when tilting the container, as illustrated in figures 20A and 20B of EP 1 462 399 A2.

The object of the present invention is to provide a method and device to load packed goods of standard, similar and preferably of non-standard, non-similar shapes and dimensions in transport units in a fast and cost-effective way, efficiently making use of the space available in the transport units, thus resolving at least some of the disadvantages related to traditional, both manual and mechanical loading methods.

To this end a method for loading packed goods in a transport unit according to claim 6 is provided. The method comprises the steps of
a) determining at least the dimensions of the packed goods,
b) based on step a) establishing through a planning software program an optimal loading plan for one transport unit, which loading plan includes loading sequence and orientation of the packed goods,
c) transferring the packed goods in the order of the loading sequence to an orientation unit,
d) orienting the packed goods if required by the loading plan,
e) loading the packed goods in their oriented state temporarily into an intermediate load unit with marginally smaller dimensions than those of the transport unit,
f) transferring the contents of the intermediate load unit into the transport unit in one stroke.

According to the invention, packed goods are buffered in an intermediate load unit according to an optimal loading plan, where after they are loaded in a (closable) transport unit in one stroke. Loading of the packed goods in the intermediate load unit is preferably carried out by a palletizing unit, known per se. Known methods of loading packed goods in transport units of the type according to the invention load piece by piece. By buffering a number of packed goods in the intermediate load unit according to an optimal loading plan, a cost effective loading method is obtained, which is easily mechanized and therefore requires minor or no human intervention at all.

Characteristics of the packed goods are determined by a method that should be able to at least determine the dimensions and the compressibility of the packed goods. In the context of the present invention, compressibility is defined as the ratio of the occupied volume of a packed good in a stacked and loaded case to the occupied volume in an uncompressed, non-loaded state. The compressibility is a function of the pressure that is exerted on a certain packed good by the layers that are stacked on top of that packed good. Determination of the compressibility of the packed goods allows to obtain an improved packing efficiency of the packed goods in the intermediate load unit, and hence also in the transport unit. According to the invention, at least the dimensions and the compressibility of the packed goods are determined by means of a scanning camera and/or stereo vision system. Such systems are known per se. The compressibility of a packed good is determined by using visual shape parameters, such as the linearity and/or the curvatures of the contours of the packed good. Based on these shape parameters, the compressibility of the packed good is placed in a particular compressibility class.

A further preferred embodiment of the method according to the invention is **characterized in that** transferring the packed goods in the order of the loading sequence to an orientation unit comprises aligning an amount of packed goods in an array, and moving the packed goods out of the array in the order of the loading sequence to transporting means leading to the orientation unit. Suitable transporting means include movable belts, conveyer belts, and the like. Moving the packed goods out of the array may be carried out by pushers, clever belt systems and/or robots for instance.

Loading the packed goods in their oriented state temporarily into an intermediate load unit with about the same dimensions as the transport unit is preferably carried out layer by layer, since this is most efficient. Other methods would include loading the packed goods in a random fashion and/or loading the packed goods in vertical stacks. Loading layer by layer is most conveniently carried out by using a device having a height adjustable floor and retractable members for controlling the motion of the floor. The device is then preferably filled with packed goods by a palletizing unit, known per se.

In another preferred method according to the invention loading the packed goods in their oriented state temporarily into the intermediate load unit is carried out until the intermediate load unit is filled for at least 90%, more preferably at least 95% and most preferably at least 98% of its inner volume, where after the contents of the intermediate load unit are transferred in the transport unit in one stroke. Such high packing degrees are attainable by the combined technical measures of the method of the invention.

To carry out the method according to the invention, a device for loading packed goods according to claim 1 is provided. The device comprises at least one load module for forming stacks of packed goods and, per load module, one intermediate load unit in which the packed goods are stacked, as well as an unloading mechanism for releasing in one stroke the stacked goods from the intermediate load unit into the transport unit that is used for actual transportation of the goods. In particular the invention also relates to a device for loading packed goods in a transport unit, the device comprising
a) an orientation unit for orienting each packed good in a predetermined direction,
b) means for transferring the packed goods in the order of a predetermined loading sequence to the orientation unit,
c) a load module, provided with an intermediate load unit for temporarily loading the packed goods in their oriented state,
d) means for transferring the contents of the intermediate load unit into the transport unit in one stroke.

The packed goods to be loaded in a transport unit may be presented to the device in a predetermined order which for instance corresponds to a maximum packing degree of the goods in the transport unit. The device according to the invention further comprises means for determining certain characteristics of the packed goods. These characteristics may vary but include at least the dimensions and the compressibility of the packed goods. The device according to the invention is **characterized in that** the means for determining the characteristics of the packed goods comprise a camera and/or vision system adapted to make one or more images of the packed goods.

The device according to the invention further comprises a computer loaded with a planning software program adapted to determine, on the basis of the characteristics of the packed goods, an optimal loading plan for one transport unit, which loading plan includes loading sequence and orientation of the packed goods. The planning software program thereto comprises an image processing software program adapted to translate the retrieved images from the camera and/or vision system into the characteristics of the packed goods.

To enable stacking of the packed goods in the intermediate load unit layer by layer, the device according to the invention preferably comprises a load module provided with a height adjustable floor and retractable members for controlling the motion of the floor. To enable loading of the contents of the intermediate load unit in the transport unit in one stroke, the load module of the device according to the invention comprises sliding members for controlling the movement of the intermediate load unit.

To enable the loading of various transport units with different shapes and/or dimensions using a single system, the load module may be equipped with an intermediate load unit that is adaptable in shape and dimensions. Another possibility is to use several load modules, each being equipped with an intermediate load unit with different, but fixed shapes and/or dimensions.

The invention will now be described in more detail, by way of example, with reference to the accompanying figures, in which:
figure 1 schematically represents a top view of a device according to the invention;
figure 2 schematically represents a side view of the device of figure 1;
figure 3 schematically represents a front view of the device of figure 1;
figure 4 schematically represents a load module of a device according to the invention;
figures 5a to 5j schematically represent the working principle of the load module in combination with the intermediate load unit step by step; and
figure 6 schematically represents an embodiment of the intermediate load unit according to the invention.

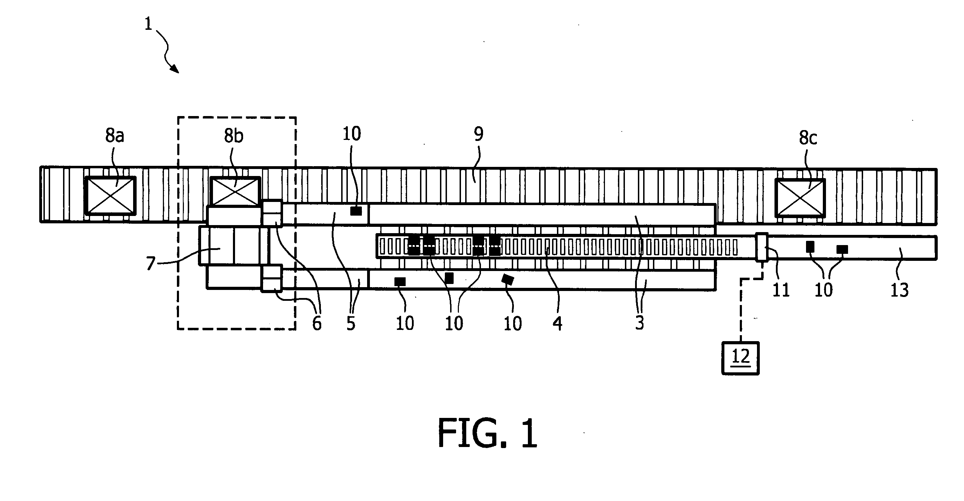

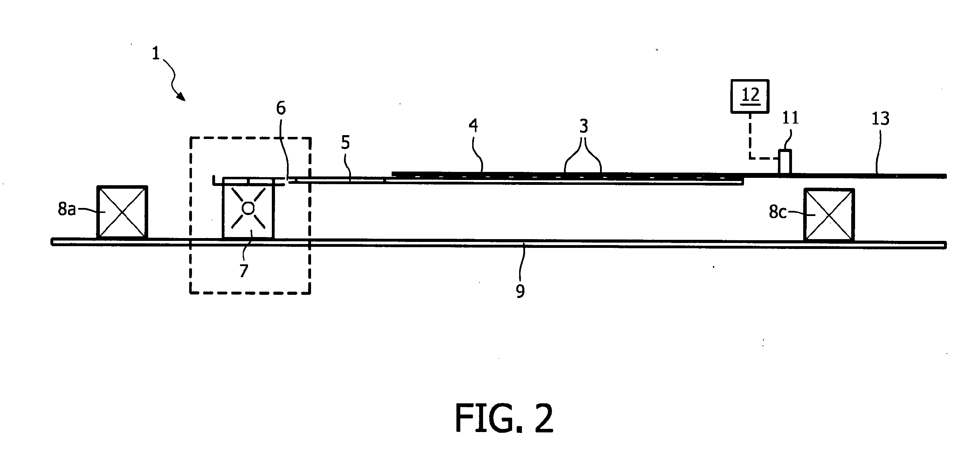

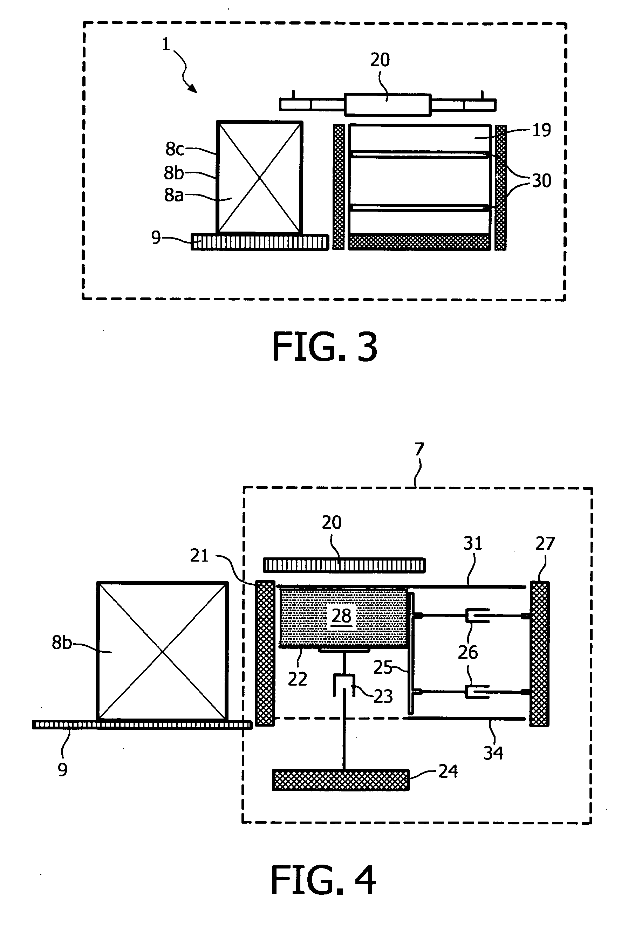

With reference to figures 1, 2 and 3, a device 1 according to the invention is shown. Device 1 is adapted for loading packed goods 10 in a transport unit 8a, 8b, 8c. Transport units 8a, 8b, 8c are typically closable containers, preferably those used in transporting air freight or luggage. In the embodiment shown, device 1 comprises two orientation units 6 for orienting each packed good 10 in a predetermined direction. The device further includes means 3 for transferring the packed goods 10 in the order of a predetermined loading sequence to the orientation units 6. The device 1 also comprises at least one load module 7, provided with an intermediate load unit 19 for temporarily loading the packed goods 10 in their oriented state (as will be explained in more detail below with reference to figure 4). The preferred embodiment shown in figures 1, 2 and 3 further comprises means 11 for determining certain characteristics of the packed goods 10. Means 11 comprise a camera and/or vision system adapted to make one or more images of the packed goods 10. During transport on a conveyor belt or transport means 13 the packed goods 10 pass through the camera and/or vision system station 11 where at least one image is captured of each packed good 10. The pictures are subsequently imported in an image processing software program, known per se. This program retrieves all relevant characteristics from the pictures, including width, length, composition and compressibility of the packed goods 10. This information is then used to determine the optimal loading sequence. Hereto, device 1 comprises a computer 12, loaded with a loading sequence and goods orientation planning software program adapted to determine, on the basis of the measured characteristics of the packed goods 10, an optimal loading plan for one transport unit 8a, 8b, 8c. The loading plan includes loading sequence and orientation of the packed goods 10.

In operation, packed goods 10 are placed on conveyor belt or transport means 13 and transported to a storage lane 4, where they are temporarily buffered. Storage lane 4 also functions as a sorting means, by disposing the packed goods 10 in the predetermined order to one of high-speed sorter lanes 3. This operation is performed by pushers for instance (not shown). Subsequently, the packed goods 10, arranged in the desired order, are transported to reach the in-feed lanes 5, from where they are fed to the orienting modules 6, for instance in the form of turning tables. Here, the packed goods 10 are oriented and aligned as prescribed by the loading sequence and goods orientation planning software program. Having the predetermined orientation, the packed goods 10 are loaded in the load module 7. Having the predetermined orientation, the packed goods reach the load module 7, and in particular the palletizing unit 20 thereof. The palletizing unit 20 forms layers of packed goods 10 in the predetermined fashion, and transfers these layers to the load module 7. The whole process is preferably controlled by computer 12, loaded with process control software.

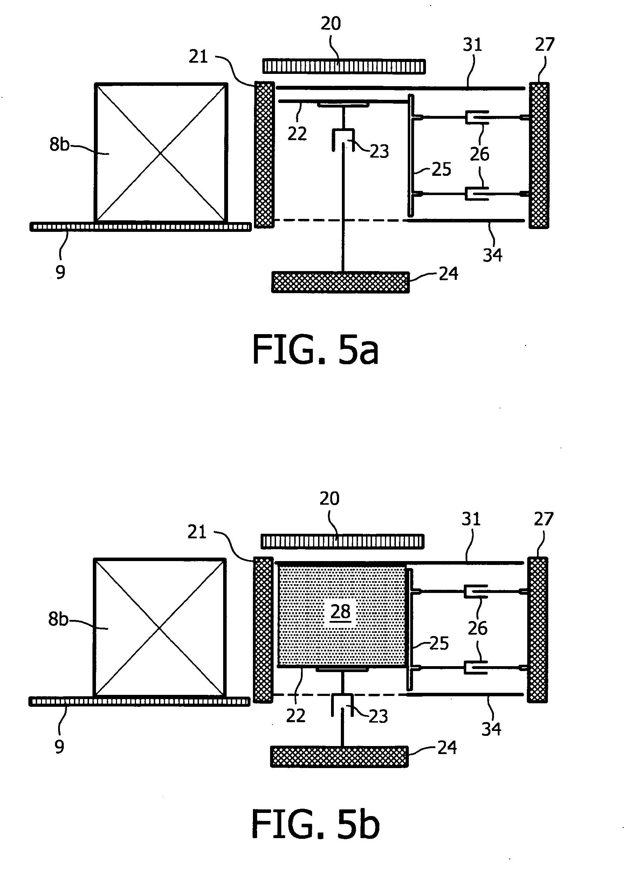

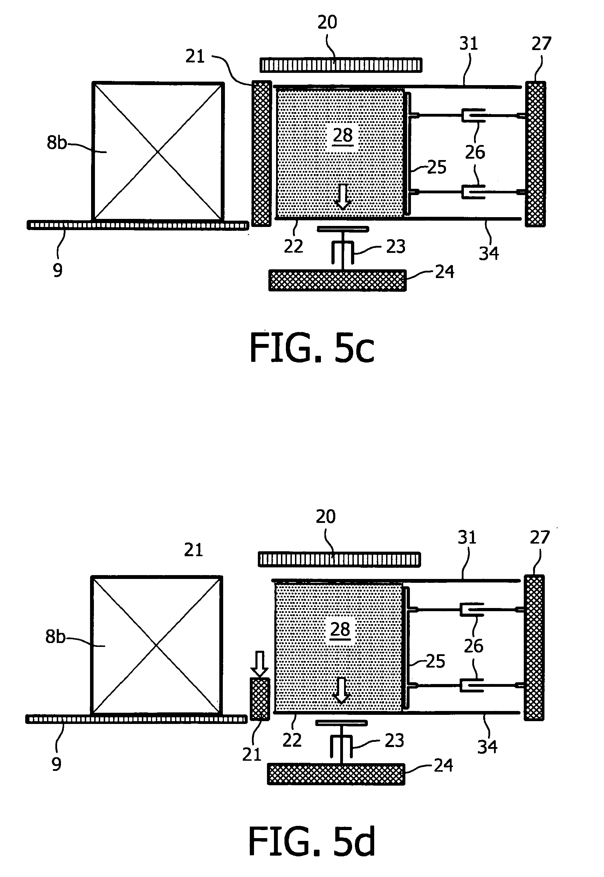

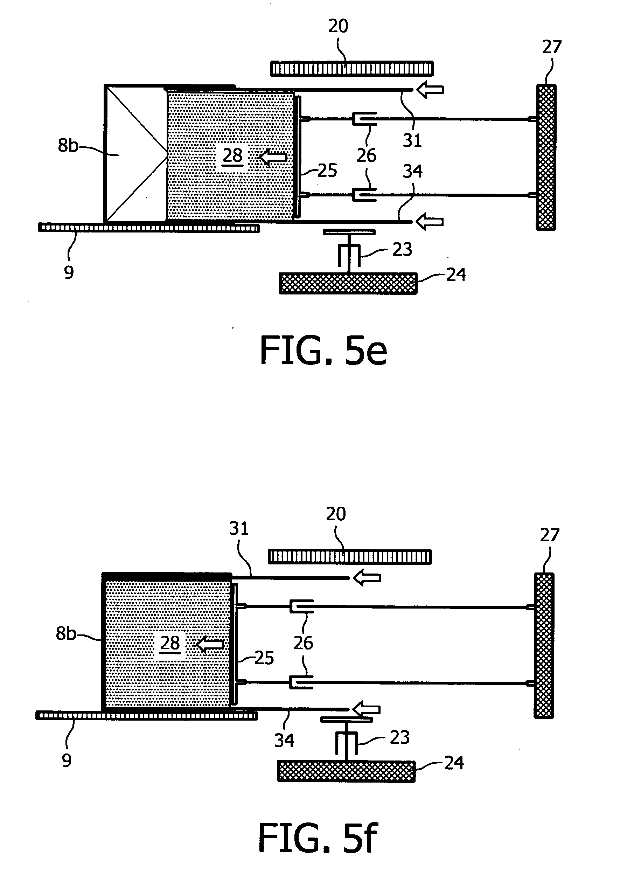

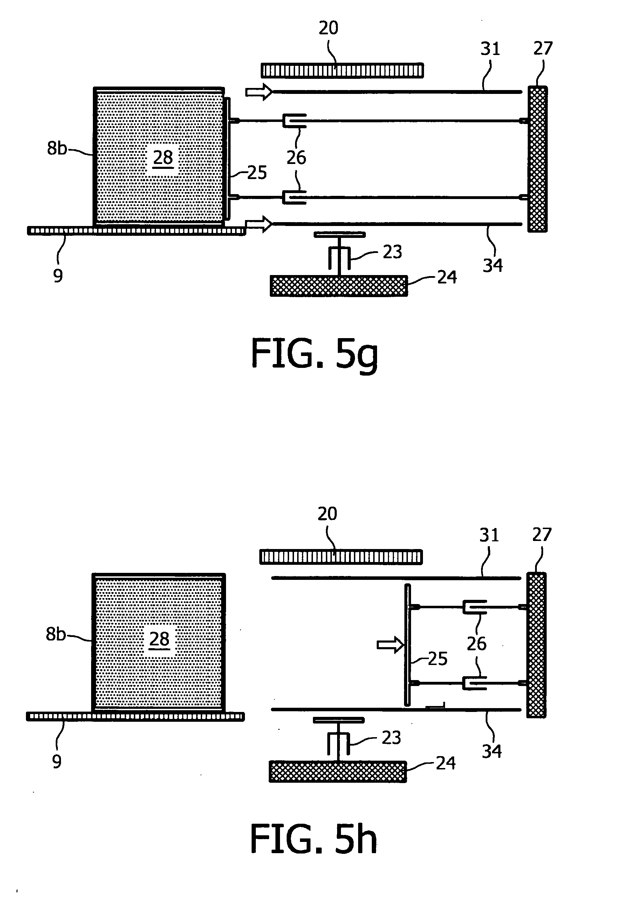

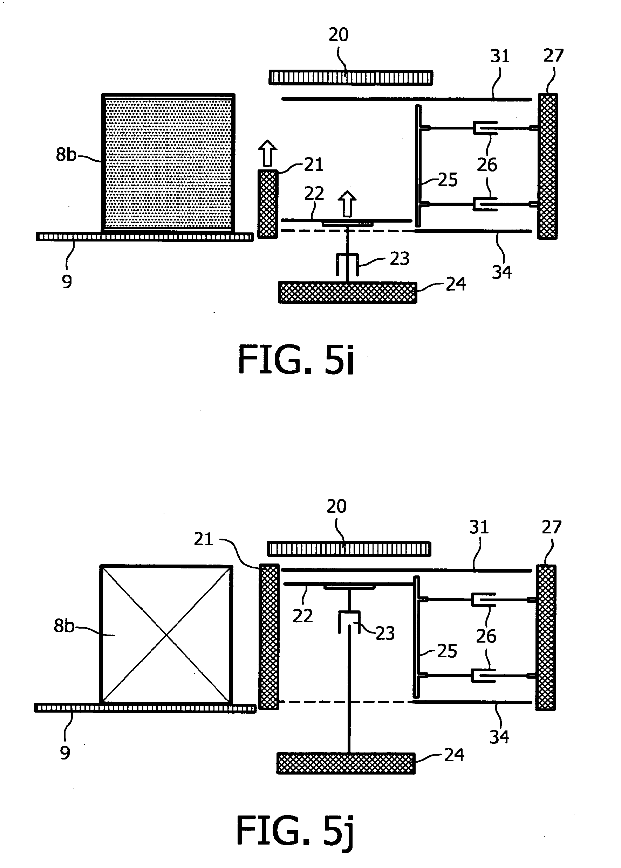

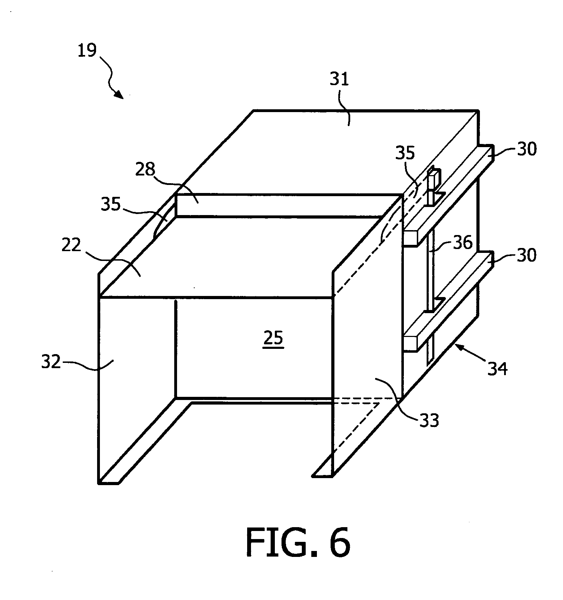

Referring to figure 4, load module 7 comprises a fixed wall 27 on one side, and a retractable wall 21 at the other side. In between the two walls 21, 27 an intermediate load unit 19 is positioned. Intermediate load unit 19 consists of a loading compartment 28, which is equipped with a height adjustable floor 22. With reference to figure 6, intermediate load unit 19 has closed side panels 32, 33 over its entire length, a top panel 31 and a bottom panel 34. Top panel 31 is preferably partly open. Bottom panel 34 is preferably partly open. Intermediate load unit 19 is further equipped with a movable middle panel 25, which divides the total internal volume of intermediate load unit 19 in two volumes. A first volume (the volume behind movable panel 25 in figure 6) is equipped with retractable members 26 (see figure 4), by the action of which movable panel 25 can be displaced. Movable panel 25 and retractable members 26 together define means for transferring the contents of the intermediate load unit into the transport unit in one stroke. A second volume in front of movable panel 25 comprises a height adjustable load floor 22. The loading compartment 28 is defined by the volume between height adjustable load floor 22, top panel 31 and side panels 32, 33. The floor 22 of the loading compartment 28 is mounted to the intermediate load unit 19 through connecting members 35, such that it is only allowed to be moved vertically along guide 36. As shown in figure 4, this floor 22 is intermittently moved downward by means of a retractable member 23, attached to a fixed bottom wall 24, each time a layer of packed goods is lowered by opening the collecting plate of palletizing machine 20. This process is illustrated in figures 5a and 5b. In the configuration shown in figure 5a the floor 22 is in its uppermost position, while in the configuration of figure 5b, floor 22 has been lowered by the action of retractable member 23 to a lower position, in this way enlarging loading compartment 28. Once the loading compartment 28 is completely filled with packed goods, the floor 22 is no longer supported by means of the retractable member 23, but has become a load-carrying member of the intermediate load unit's construction 19, by which it is also being supported. This position of the load floor 22 is shown in figure 5c. Note that retractable member 23 no longer supports floor 22. Subsequently, the retractable left door 21 is removed, such that there is no longer a barrier between the prepared transport unit 8b and the construction of the load unit 19. This configuration corresponds to the one shown in figure 5d. Transport units 8a, 8b and 8c each have at least four fixed panels, and one or two panels that may be opened. Transport unit 8b is prepared in a sense that it is clamped when positioned next to the load module 7, with one of the non-fixed panels being opened and facing the intermediate load unit's construction 19. The latter is constructed in such a way that the exterior dimensions of the loading compartment 28 in its maximum position (floor 22 in its lowest position) are only marginally smaller than the interior dimensions of the transport units 8a, 8b and 8c. After the retractable wall 21 has been removed, the entire construction is moved by means of supportive sliding members 30 on either side, in such a way that the loading compartment 28 is entirely inserted and placed in the prepared transport unit 8b in essentially one stroke. This process is shown in figure 5e. The configuration shown in figure 5f corresponds to a fully loaded transport unit. Simultaneously, the retractable members 26, on one side connected to a movable middle panel 25 that acts as a wall section of the loading compartment 28 and on the other side to the fixed wall 27, are extended such that the movable middle panel 25 moves along with the entire intermediate load unit's construction 19. In a next step, the construction of the intermediate load unit 19 is, again by means of the supportive sliding members 30 moved in the opposite direction and withdrawn again, while maintaining the position of the loose middle panel 25. This way, the content of the loading compartment 28, being the stack of packed goods, is entirely released into the transport unit 8b. This process is shown in figure 5g. Next, the members 26 are retracted again, thus moving the loose middle panel 25 back to its initial position, as is shown in figure 5h. In the following step, illustrated in figures 5i and 5j, the retractable left wall 21 is put back in place again and the adjustable floor 22 is, supported by retractable member 23, moved to the upmost position. Finally, the filled transport unit 8b is closed and, making use of a roller bed 9 or transport means of the like, moved away from the load module, which in turn is fed with an empty, unprepared and unfilled transport unit 8a of the same type and with similar shape and dimensions as transport unit 8b.

## Claims

1. A device (1) for loading packed goods (10) in a transport unit (8a, 8b, 8c), the device comprising
a) an orientation unit (6) for orienting each packed good (10) in a predetermined direction,
b) means (3) for transferring the packed goods (10) in the order of a predetermined loading sequence to the orientation unit (6),
c) a load module (7), provided with an intermediate load unit (19) for temporarily loading the packed goods (10) in their oriented state,
d) means (25, 26) for transferring the contents of the intermediate load unit (19) into the transport unit (8a, 8b, 8c) in one stroke, and
e) means (11) for determining certain characteristics of the packed goods (10), wherein the device further comprises a computer (12) loaded with a planning software program adapted to determine, on the basis of the characteristics of the packed goods (10), an optimal loading plan for one transport unit (8a, 8b, 8c), which loading plan includes the loading sequence and orientation of the packed goods (10), and wherein the means (11) for determining the characteristics of the packed goods (10) comprise a camera and/or vision system adapted to make one or more images of the packed goods (10), and the planning software program comprises an image processing software program adapted to translate the retrieved images into the characteristics of the packed goods (10), wherein the characteristics at least include dimensions and compressibility of the packed goods (10).

2. Device according to claim 1, wherein the load module (7) comprises a height adjustable floor (22) and retractable members (23) for controlling the motion of the floor (22).

3. Device according to claim 1, wherein the load module (7) comprises sliding members (30) for controlling the movement of the intermediate load unit (19).

4. Device according to any one of the preceding claims, wherein the dimensions of the intermediate load unit (11) are adaptable to match those of different transport units (8a, 8b, 8c).

5. Device according to any one of the preceding claims, wherein the intermediate load unit (11), having fixed and non-adaptable dimensions, may be interchanged with at least one other intermediate load unit (11) with fixed and non-adaptable dimensions, to match the dimensions of different transport units (8a, 8b, 8c).

6. A method for loading packed goods (10) in a transport unit (8a, 8b, 8c), the method comprising the steps of
a) determining at least the dimensions of the packed goods (10),
b) based on step a) establishing through a planning software program an optimal loading plan for one transport unit (8a, 8b, 8c), which loading plan includes loading sequence and orientation of the packed goods (10),
c) transferring the packed goods (10) in the order of the loading sequence to an orientation unit (6),
d) orienting the packed goods (10) if required by the loading plan,
e) loading the packed goods (10) in their oriented state temporarily into an intermediate load unit (19) with marginally smaller dimensions than those of the transport unit (8a, 8b, 8c),
f) transferring the contents of the intermediate load unit (19) into the transport unit (8a, 8b, 8c) in one stroke,
wherein step a) is carried out by means of a scanning camera and/or stereo vision system, and wherein step a) comprises determining the compressibility of the packed goods (10).

7. Method according to claim 6, wherein step c) comprises aligning an amount of packed goods (10) in an array, and moving the packed goods (10) out of the array in the order of the loading sequence to transporting means (3) leading to the orientation unit (6).

8. Method according to claim 6 or 7, wherein step e) is carried out layer by layer.

9. Method according to any one of claims 6-8, wherein step f) is carried out when the intermediate load unit (19) is filled for at least 95% of its inner volume.

10. Method according to any one of claims 6-9, wherein step e) is carried out by a palletizing unit (20).

## Patentansprüche

1. Eine Vorrichtung (1) zum Laden verpackter Güter (10) in eine Transporteinheit (8a, 8b, 8c), wobei die Vorrichtung Folgendes umfasst:
a) eine Ausrichtungseinheit (6) zum Ausrichten der verpackten Güter (10) in einer festgelegten Richtung,
b) Mittel (3) zum Weiterleiten der verpackten Güter (10) zur Ausrichtungseinheit (6) in der Reihenfolge einer festgelegten Ladesequenz,
c) ein Lademodul (7) mit einer Zwischenladeeinheit (19) zum vorübergehenden Laden der verpackten Güter (10) in ihrem ausgerichteten Zustand,
d) Mittel (25, 26) zum Weiterleiten der Inhalte der Zwischenladeeinheit (19) in die Transporteinheit (8a, 8b, 8c) in einer Bewegung, und
e) Mittel (11) zum Feststellen bestimmter Eigenschaften der verpackten Güter (10), wobei die Vorrichtung des Weiteren einen Computer (12) mit einem Planungssoftwareprogramm umfasst, das angewendet wird, um auf der Grundlage der Eigenschaften der verpackten Güter (10) einen optimalen Ladeplan für eine Transporteinheit (8a, 8b, 8c) festzulegen, wobei der Ladeplan die Ladesequenz und die Ausrichtung der verpackten Güter (10) beinhaltet und wobei das Mittel (11) zum Feststellen der Eigenschaften der verpackten Güter (10) eine Kamera und/oder ein Bildsystem umfasst, die/das angewendet wird, um eines oder mehrere Bilder der verpackten Güter (10) zu machen, und das Planungssoftwareprogramm ein Bildverarbeitungssoftwareprogramm umfasst, das angewendet wird, um die abgerufenen Bilder in die Eigenschaften der verpackten Güter (10) zu übertragen, wobei die Eigenschaften mindestens die Abmessungen und die Kompressibilität der verpackten Güter (10) umfassen.

2. Vorrichtung nach Anspruch 1, bei der das Lademodul (7) einen höhenverstellbaren Boden (22) und ausfahrbare Elemente (23) zur Steuerung der Bewegung des Bodens (22) umfasst.

3. Vorrichtung nach Anspruch 1, bei der das Lademodul (7) Schiebeelemente (30) zur Steuerung der Bewegung der Zwischenladeeinheit (19) umfasst.

4. Vorrichtung nach einem der oben genannten Ansprüche, bei der die Abmessungen der Zwischenladeeinheit (11) anpassbar sind, um sie an die Abmessungen verschiedener Transporteinheiten (8a, 8b, 8c) anzugleichen.

5. Vorrichtung nach einem der oben genannten Ansprüche, bei der die Zwischenladeeinheit (11), die feststehende und nicht anpassbare Abmessungen hat, mit mindestens einer anderen Zwischenladeeinheit (11) mit feststehenden und nicht anpassbaren Abmessungen ausgetauscht werden kann, um sie an die Abmessungen verschiedener Transporteinheiten (8a, 8b, 8c) anzugleichen.

6. Ein Verfahren zum Laden verpackter Güter (10) in eine Transporteinheit (8a, 8b, 8c), wobei das Verfahren folgende Schritte umfasst:
a) die Feststellung von mindestens den Abmessungen der verpackten Güter (10),
b) auf der Grundlage von Schritt a) die Festlegung eines optimalen Ladeplans durch ein Planungssoftwareprogramm für eine Transporteinheit (8a, 8b, 8c), wobei der Ladeplan die Ladesequenz und Ausrichtung der verpackten Güter (10) umfasst,
c) die Weiterleitung der verpackten Güter (10) zu einer Ausrichtungseinheit (6) in der Reihenfolge der Ladesequenz,
d) die Ausrichtung der verpackten Güter (10), sofern dies vom Ladeplan vorgesehen ist,
e) die vorübergehende Ladung der verpackten Güter (10) in ihrem ausgerichteten Zustand in eine Zwischenladeeinheit (19) mit unwesentlich kleineren Abmessungen als die Transporteinheit (8a, 8b, 8c),
f) die Weiterleitung der Inhalte der Zwischenladeeinheit (19) in die Transporteinheit (8a, 8b, 8c) in einer Bewegung,
wobei Schritt a) mit Hilfe einer Abtastkamera und/oder eines Stereobildsystems durchgeführt wird, und wobei Schritt a) die Bestimmung der Kompressibilität der verpackten Güter (10) umfasst.

7. Verfahren nach Anspruch 6, bei dem Schritt c) die Anordnung einer Menge verpackter Güter (10) in einem Bereich und den Transport der verpackten Güter (10) aus dem Bereich zum Transportmittel (3), das zur Ausrichtungseinheit (6) führt, in der Reihenfolge der Ladesequenz umfasst.

8. Verfahren nach Anspruch 6 oder 7, bei dem Schritt e) Schicht für Schicht durchgeführt wird.

9. Verfahren nach einem der Ansprüche 6-8, bei dem Schritt f) ausgeführt wird, wenn mindestens 95 % des Innenvolumens der Zwischenladeeinheit (19) befüllt sind.

10. Verfahren nach einem der Ansprüche 6-9, bei dem Schritt e) von einer Palletierungseinheit (20) durchgeführt wird.

## Revendications

1. Dispositif (1) pour charger des articles conditionnés (10) dans une unité de transport (8a, 8b, 8c), le dispositif comprenant :
a) une unité d'orientation (6) pour orienter chaque article conditionné (10) dans une direction prédéterminée ;
b) des moyens (3) pour transférer les articles conditionnés (10) dans l'ordre d'une séquence de chargement prédéterminée jusqu'à l'unité d'orientation (6) ;
c) un module de chargement (7), pourvu d'une unité de chargement intermédiaire (19) pour charger temporairement les articles conditionnés (10) dans leur état orienté ;
d) des moyens (25, 26) pour transférer le contenu de l'unité de chargement intermédiaire (19) dans l'unité de transport (8a, 8b, 8c) en une fois, et
e) des moyens (11) pour déterminer certaines caractéristiques des articles conditionnés (10), étant entendu que le dispositif comprend par ailleurs un ordinateur (12) chargé d'un programme logiciel de planification adapté pour déterminer, sur la base des caractéristiques des articles conditionnés (10), un plan de chargement optimal pour une unité de transport (8a, 8b, 8c), lequel plan de chargement inclut la séquence de chargement et l'orientation des articles conditionnés (10), et étant entendu que les moyens (11) pour déterminer les caractéristiques des articles conditionnés (10) comprennent un système de caméra et/ou de vision adapté pour prendre une ou plusieurs images des articles conditionnés (10), et que le programme logiciel de planification comprend un programme logiciel de traitement d'images adapté pour transposer les images extraites en caractéristiques des articles conditionnés (10), étant entendu que les caractéristiques incluent au moins les dimensions et la compressibilité des articles conditionnés (10).

2. Dispositif selon la revendication 1, dans lequel le module de chargement (7) comprend un plancher réglable en hauteur (22) et des organes rétractables (23) pour commander le mouvement du plancher (22).

3. Dispositif selon la revendication 1, dans lequel le module de chargement (7) comprend des organes coulissants (30) pour commander le mouvement de l'unité de chargement intermédiaire (19).

4. Dispositif selon l'une quelconque des revendications précédentes, dans lequel les dimensions de l'unité de chargement intermédiaire (11) sont adaptables pour correspondre à celles d'unités de transport (8a, 8b, 8c) différentes.

5. Dispositif selon l'une quelconque des revendications précédentes, dans lequel l'unité de chargement intermédiaire (11), de dimensions fixes et non adaptables, peut être remplacée par au moins une autre unité de chargement intermédiaire (11) de dimensions fixes et non adaptables, pour correspondre aux dimensions d'unités de transport (8a, 8b, 8c) différentes.

6. Procédé pour charger des articles conditionnés (10) dans une unité de transport (8a, 8b, 8c), le procédé comprenant les étapes consistant :
a) à déterminer au moins les dimensions des articles conditionnés (10),
b) sur la base de l'étape a), à établir au moyen d'un programme logiciel de planification un plan de chargement optimal d'une unité de transport (8a, 8b, 8c), lequel plan de chargement inclut la séquence de chargement et l'orientation des articles conditionnés (10) ;
c) à transférer les articles conditionnés (10) dans l'ordre de la séquence de chargement jusqu'à une unité d'orientation (6) ;
d) à orienter les articles conditionnés (10) si le plan de chargement le requiert ;
e) à charger temporairement les articles conditionnés (10) dans leur état orienté dans une unité de chargement intermédiaire (19) de dimensions légèrement plus petites que celles de l'unité de transport (8a, 8b, 8c) ;
f) à transférer le contenu de l'unité de chargement intermédiaire (19) dans l'unité de transport (8a, 8b, 8c) en une fois,
étant entendu que l'étape a) est exécutée au moyen d'un système de caméras à balayage et/ou de vision stéréoscopique, et étant entendu que l'étape a) consiste à déterminer la compressibilité des articles conditionnés (10).

7. Procédé selon la revendication 6, dans lequel l'étape c) consiste à aligner une certaine quantité d'articles conditionnés (10) sur une rangée et à déplacer les articles conditionnés (10) hors de la rangée dans l'ordre de la séquence de chargement jusqu'aux moyens de transport (3) menant à l'unité d'orientation (6).

8. Procédé selon la revendication 6 ou 7, dans lequel l'étape e) est exécutée couche par couche.

9. Procédé selon l'une quelconque des revendications 6-8, dans lequel l'étape f) est exécutée quand l'unité de chargement intermédiaire (19) est remplie à au moins 95 % de son volume intérieur.

10. Procédé selon l'une quelconque des revendications 6-9, dans lequel l'étape e) est exécutée par une unité de palettisation (20).
